# DEMANDE DE BREVET EUROPEEN

(11) **EP 0 969 626 A1**
(43) Date de publication de la demande: **05.01.2000**
(21) Numéro de dépôt: 99401596.4
(22) Date de dépôt: 25.06.1999
(51) Int. Cl.: H04L 12/24, G06F 3/033

(54) **Visualisation d'une navigation dans un arbre de contenance**

(30) Priorité: 30.06.1998 FR 9808295
(71) Demandeur: BULL S.A., 78434 Louveciennes Cedex (FR)
(72) Inventeur: Leygues, François, 75004 Paris (FR); Bey, Thierry, 78220 Viroflay (FR)
(74) Mandataire: Denis, Hervé

(57) **Abrégé**

Le système SYS inclut un arbre de contenance conforme au protocole de gestion de type CMIS/CMIP, ledit arbre étant un programme représenté par l'intermédiaire d'une structure organisée de manière hiérarchique avec une racine (ROOT) et au moins un noeud associé à un objet, un objet étant défini par un contenu incluant une classe d'objets et des propriétés, le procédé de navigation consistant à parcourir l'arbre entre des noeuds et étant. Le procédé consiste à visualiser au moyen d'une interface graphique d'un outil de navigation (NAV),
- le contenu d'un objet sélectionné,
- et la position de cet objet sélectionné par l'intermédiaire d'une structure arborescente (ARB) faisant apparaître à la fois la classe d'objets et l'instance associées à l'objet sélectionné ainsi que tout ou partie des classes et instances associées aux objets visualisés au cours de la navigation.

## Description

### Domaine technique:

L'invention concerne une visualisation d'une navigation, dans un système informatique, dans un arbre de contenance de type CMIS (Common Managment Information Service) ou CMIP (Common Managment Information Protocol).

Dans ce système informatique, un système de gestion de type OPENMASTER (marque déposée), connue de l'homme du métier, est particulièrement bien adapté à la présente invention. Ce système de gestion peut être assimilé à un ensemble de services qui interagissent entre eux pour donner une représentation virtuelle du monde réel qui est le système informatique. C'est une représentation virtuelle qu'un administrateur manipule (surveillance, action) pour gérer le monde réel. La représentation virtuelle porte sur des objets virtuels du monde réel et constitue un modèle objet. Cette représentation virtuelle est « matérialisée » par l'intermédiaire d'un arbre de contenance.

Par définition, l'arbre de contenance est orienté objet. Cet arbre est un logiciel conforme au protocole CMIS ou CMIP selon que l'application se repose sur le modèle OSI (Open System Interconnection) d'architecture en couche de l'ISO (International Organization for Standardization) ou sur le modèle TCP/IP (Transport Control Protocol - Internet Protocol). Cet arbre comprend en ses noeuds l'ensemble des objets gérés par le système de gestion. Par définition, un objet géré est une vue abstraite, définie pour les besoins de gestion, d'une ressource logique ou physique d'un système.

De manière générale et connue de l'homme du métier, pour créer un objet dans cette base, il faut choisir sa classe, le nommer conformément aux liens de nommage relatifs à la classe, et donner une valeur à ses attributs.

Une classe d'objets gérés est un ensemble nommé d'objets gérés partageant les mêmes propriétés. Une propriété d'un objet inclut des attributs. Un attribut est une caractéristique d'un objet géré qui a un type nommé et une valeur. La valeur d'un attribut d'un objet peut être consultée ou modifiée par une requête adressée à l'objet. Nommer un objet d'une classe donnée, c'est choisir, conformément aux liens de nommage possibles, ce que l'homme du métier appelle le plus souvent son Global Distinguished Name, c'est-à-dire choisir son supérieur dans l'arbre de nommage et choisir son Relative Distinguished Name vis-à-vis de ce supérieur. Le nommage des objets fait appel à un arbre de nommage. Chaque objet se situe dans l'arbre de nommage par rapport à un supérieur dont il est le subordonné. Cette relation subordonnée-supérieure est spécifiée au niveau des classes par un lien de nommage (NAME BINDING en anglais). Lors de la création d'un objet, il faut choisir un lien de nommage parmi les liens de nommage possibles pour les objets de cette classe. Plusieurs liens de nommage peuvent être défini pour une même classe, mais un objet ne peut avoir qu'un seul supérieur immédiat.

Un arbre de contenance est un arbre constitué d'instances.

L'invention a pour objets un procédé de navigation dans un arbre de contenance et un outil de navigation pour la mise en oeuvre d'un tel procédé.

### L'art antérieur:

L'arbre de contenance est un programme que l'on peut représenter de façon hiérarchisée à l'aide d'un outil de navigation. L'outil de navigation comprend un programme. Une interface graphique décrit les moyens mis en oeuvre par ce programme pour entrer en contact avec un utilisateur. Par définition, une interface graphique a pour fonction de décrire l'arbre de contenance pour entrer en contact avec un utilisateur. De manière connue, cette interface graphique est un environnement composé d'icônes, de fenêtres et de menus déroulants. Un écran d'ordinateur de type PC (Personal Computer), connu de l'homme du métier, donne une visualisation de l'outil de navigation.

Un outil de navigation conforme au protocole CMIS/CMIP donne la possibilité à un utilisateur d'obtenir des informations sur les objets qu'il souhaite manipuler. Un outil de navigation se définit comme étant une application générique. Cet outil comprend un service de méta-données qui rend visible les différents types d'objets susceptibles d'être présents dans l'arbre de contenance. Ces méta-données sont obtenues, de manière générale, après compilation de la description de ces objets au format GDMO (Guidelines for the Definition of Managed Objects) connu de l'homme du métier. Grâce à cet outil de navigation, un utilisateur peut obtenir, par exemple:
- la liste des classes subordonnées à un objet,
- la liste des attributs associée à chaque objet d'une classe,
- l'icône susceptible de représenter une classe à l'écran.

A l'heure actuelle, il existe un outil de navigation généralement utilisé pour visualiser de façon intéractive les objets situés dans l'arbre de contenance. Cet outil de navigation représente graphiquement la structure arborescente et hiérarchisée de l'arbre de contenance. Cet outil consiste à visualiser uniquement la structure de l'arbre. Cette méthode est équivalente à celle utilisée sur les ordinateurs de type PC (Personal Computer). Cette méthode privilégie une présentation de la structure de l'arbre de contenance par l'intermédiaire d'une structure arborescente des répertoires et fichiers. Ce type de présentation se borne à une vision de l'arbre. On visualise l'arbre de contenance de façon entièrement déployé sous la forme d'icônes de classes et d'instances reliées de façon hiérarchique par des branches.

Le gros problème est que l'arbre de contenance, à la différence d'une structure répertoire/fichier connue dans le monde du PC où seuls les fichiers ont un contenu, comprend en chacun de ses noeuds un contenu caractérisé par une classe et des propriétés Dans un arbre de contenance, la liste des instances associées à une classe peut être très importante (plusieurs centaines). La visualisation d'un objet inclu dans un arbre de contenance formaté verticalement, impose donc, à un utilisateur des opérations de déroulement importantes et très coûteuses en temps.

De plus, Il est très difficile d'apprécier le parcours effectué entre la racine et un objet donné, surtout lorsque l'objet est éloigné de la racine de l'arbre.

### L'invention

Un premier but de l'invention est de définir une métaphore de visualisation qui permette à l'utilisateur de visualiser simplement les deux types d'information indispensables, à savoir la structure de l'arbre de contenance et le contenu des objets inclus dans l'arbre de contenance.

Un second but de l'invention est la possibilité de situer de manière simple un objet de l'arbre de contenance.

Un troisième but visé est d'accéder à un objet quelconque de l'arbre de contenance en un temps très réduit.

A cet effet, l'invention a pour objet un procédé de navigation dans un arbre de contenance conforme au protocole de gestion de type CMIS/CMIP, ledit arbre étant un programme représenté par l'intermédiaire d'une structure organisée de manière hiérarchique avec une racine et au moins un noeud associé à un objet, un objet étant défini par un contenu incluant une classe d'objets et des propriétés, le procédé de navigation consistant à parcourir l'arbre entre des noeuds et étant, caractérisé en qu'il consiste à visualiser au moyen d'une interface graphique d'un outil de navigation,
- le contenu d'un objet sélectionné,
- et la position de cet objet sélectionné par l'intermédiaire d'une structure arborescente faisant apparaître à la fois la classe d'objets et l'instance associées à l'objet sélectionné ainsi que tout ou partie des classes et instances associées aux objets visualisés au cours de la navigation.

L'invention a aussi pour objet un outil de navigation d'un arbre de contenance conforme au protocole de gestion de type CMIS/CMIP, ledit arbre de contenance étant un programme représenté par l'intermédiaire d'une structure organisée de manière hiérarchique avec une racine et au moins un noeud associé à un objet, un objet étant défini par un contenu incluant une classe d'objets et des propriétés, caractérisé en ce qu'il comprend un ruban et une structure arborescente pour la mise en oeuvre du procédé.

L'invention sera mieux comprise à la lecture de la description qui suit, donnée à titre d'exemple et faite en référence aux dessins annexés.

### Dans les dessins:

- la figure 1 est une vue synoptique d'un système informatique conforme à l'invention.
- la figure 2 est une vue conceptuelle de la composition d'un arbre de contenance.
- la figure 3 est une vue schématique partielle d'un outil de navigation conforme à la présente invention.
- les figures 4a à 4g sont des vues similaires à celles de la figure 3 et représentent diverses étapes d'un exemple de procédé de navigation dans un arbre de contenance conforme à la présente invention.

### Description

Pour simplifier la description, les mêmes éléments illustrés dans les dessins portent les mêmes références.

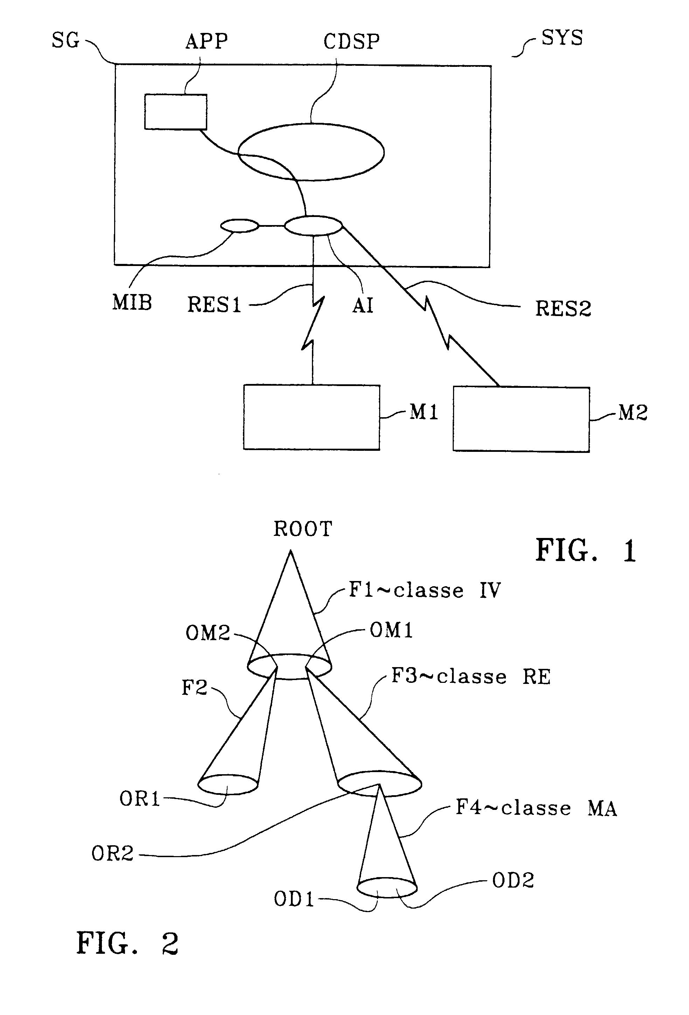

Sur la figure 1, on a représenté un système informatique SYS distribué de type hétérogène. Dans l'exemple illustré, ce système SYS inclut un système gestionnaire SG et au moins une machine distante associée à un protocole de gestion. Le système de gestion est un système purement logiciel qui peut être compris dans une station de travail. Dans l'exemple, on a représenté deux machines distantes M1 et M2. Une machine M1 ou M2 comprend des objets manipulables. Une manipulation inclut des commandes connues de l'homme du métier. Le protocole de gestion de la machine M1 ou M2 peut-être indifféremment un protocole de type SNMP, CMIS/CMIP ou DSAC/AEP. Dans l'exemple illustré, le protocole de gestion des deux machines est identique. Dans notre exemple, le système SG inclut une application de gestion APP supportant un protocole de type CMIS conforme au modèle OSI (Common Managment Information service), connu de l'homme du métier. Dans l'invention, l'application de gestion APP est de type logicielle. Cette application peut être lancée par l'intermédiaire d'un utilisateur UT de ce système de gestion SG. Un utilisateur peut être un administrateur. Le système SG comprend aussi, dans l'exemple illustré, un routeur CDSP (CMIS Dispatcher Process), connu de l'homme du métier. Dans l'invention, ce routeur CDSP comprend un programme comprenant lui-même une méthode algorithmique de routage.

Le système gestionnaire SG comprend également au moins un agent intégrateur associé à un protocole de gestion afin de masquer l'hétérogénéité du système informatique. Dans l'exemple illustré, un agent intégrateur Al est associé au protocole de gestion de la machine M1 et de la machine M2. De façon générale, un agent intégrateur est de type logiciel. Il procure des services. Un service peut être une conversion du protocole de gestion. Dans l'exemple illustré, l'agent intégrateur Al convertit le protocole de gestion du système de gestion SG en un protocole de gestion associé à la machine M1. Réciproquement, l'agent intégrateur Al convertit le protocole de gestion associé à la machine M1 ou M2 en un protocole de gestion associé au système de gestion SG. Un agent intégrateur ne se limite pas à ce type de service et procure d'autres services. De manière générale, une conversion de protocole de gestion s'effectue naturellement entre un système de gestion SG et une machine qui supportent des protocoles de gestion différents.

Naturellement, le serveur de gestion SG peut comprendre plusieurs agents intégrateurs. L'agent intégrateur Al est relié à la machine M1 et à la machine M2 par l'intermédiaire d'un réseau respectif RES1 et RES2 de type quelconque. Le réseau RES1, tout comme le réseau RES2, peut être de type LAN (Local Area Network) ou WAN (Wide Area Network). Un ensemble de couches logicielles s'interpose entre le système de gestion SG et le réseau RES et entre le réseau et chaque machine M1 et M2. Cet ensemble de couches logicielle repose sur le modèle OSI (Open System Interconnection) d'architecture en couche de l'ISO (International Organization for Standardization), connu de l'homme du métier. Pour des raisons de simplification de la description, cet ensemble de couches logicielles n'est pas représenté sur la figure 1.

De manière générale, une interface de programmation de type API (Application Program Interface), connue de l'homme de métier, interface l'application APP et le routeur CDSP ainsi que le routeur CDSP et l'agent intégrateur Al.

Dans l'exemple illustré, le routeur CDSP route une requête issue de l'application APP vers une destination finale. Concrètement, le routeur CDSP route des requêtes issues de l'application de gestion APP en direction de l'agent intégrateur approprié. Une requête est, de manière générale, une manipulation d'objets sur une machine distante. Par définition, ce routeur mémorise le contexte et route également une réponse en direction de l'application qui est à l'origine de l'interrogation.

Le système de gestion SG comprend aussi un arbre de contenance MIB associé à l'agent intégrateur Al. Une vue de cet arbre de contenance MIB est représentée sur la figure 2.

L'arbre de contenance peut être entièrement compris dans l'agent intégrateur Al. Pour simplifier la description, on a choisi de séparer, sur la figure 2, l'arbre de contenance MIB et l'agent intégrateur Al. Cet arbre MIB assure une représentation virtuelle du monde réel qui entoure le système de gestion SG. C'est une représentation virtuelle que l'utilisateur UT ou qu'un administrateur manipule (surveillance, action) pour gérer le monde réel. La représentation virtuelle porte sur des objets virtuels du monde réel et constitue un modèle objet. Dans l'exemple illustré, le monde réel est matérialisé par le machine M1.

Par définition, l'arbre de contenance MIB est orienté objet et est constitué de noeuds et de branches. Cet arbre comprend en ses noeuds l'ensemble des objets gérés par le système de gestion SG. De manière générale et connue de l'homme du métier, pour créer un objet dans cette base MIB, il faut choisir sa classe, le nommer conformément aux liens de nommage relatifs à la classe, et valoriser ses attributs. Un objet géré est une vue abstraite, définie pour les besoins de gestion, d'une ressource logique ou physique d'un système.

Dans cet arbre, des noeuds appartiennent à une même classe et chacun de ces noeuds est relié à un même supérieur unique de l'arbre. Le lien entre un supérieur et l'ensemble de ces subordonnés appartenant tous à une même classe est représenté sous la forme de faisceaux F1-F4 sur la figure 2.

Concrètement, cet arbre comprend une racine dite ROOT. Le faisceau F1 comprend au moins un objet de même classe et est issu de cette racine ROOT. Dans l'exemple illustré, le faisceau F1 comprend deux objets OM1 et OM2 qui représentent les machines respectives M1 et M2, objets appartenant à une même classe dite classe inventaire IV.

De la même façon, Un faisceau F2 est issu de l'objet OM2. Ce faisceau comprend au moins un objet d'une même classe dite classe « réseau ». Dans l'exemple illustré, on a représenté un objet OR1 qui est une instance de la classe « réseau» RE.

Un faisceau F3 est issu de l'objet OM1. Ce faisceau comprend au moins un objet de la classe « réseau » RE. Dans l'exemple illustré, on a représenté un objet OR2 comme instance de la classe RE.

Enfin, un faisceau F4 est issu de l'objet OR2. Dans l'exemple illustré, on a représenté deux objets OD1 et OD2 comme instances de la classe « matériel » MA.

Plusieurs opérations ou manipulations peuvent s'appliquer sur les objets à condition que celles-ci ait été autorisée lors de la spécification de la classe dans l'arbre de contenance MIB. Les opérations incluent les commandes « get attribute value » ou encore « replace attribute value ». De même, des opérations peuvent s'appliquer sur des objets. Les opérations peuvent être du type :
- « Create » pour la création d'un objet d'une classe
- « Delete » pour demander à un objet géré de se détruire
- « Action » pour demander à un objet d'exécuter une action spécifiée dans la définition de la classe.

Le gros problème est qu'il est difficile pour un utilisateur de situer un objet dans l'arbre, surtout lorsque l'objet sélectionné est éloigné de la racine de l'arbre. Un autre problème est que la sélection d'un objet impose à l'utilisateur des opérations de déroulement importantes.

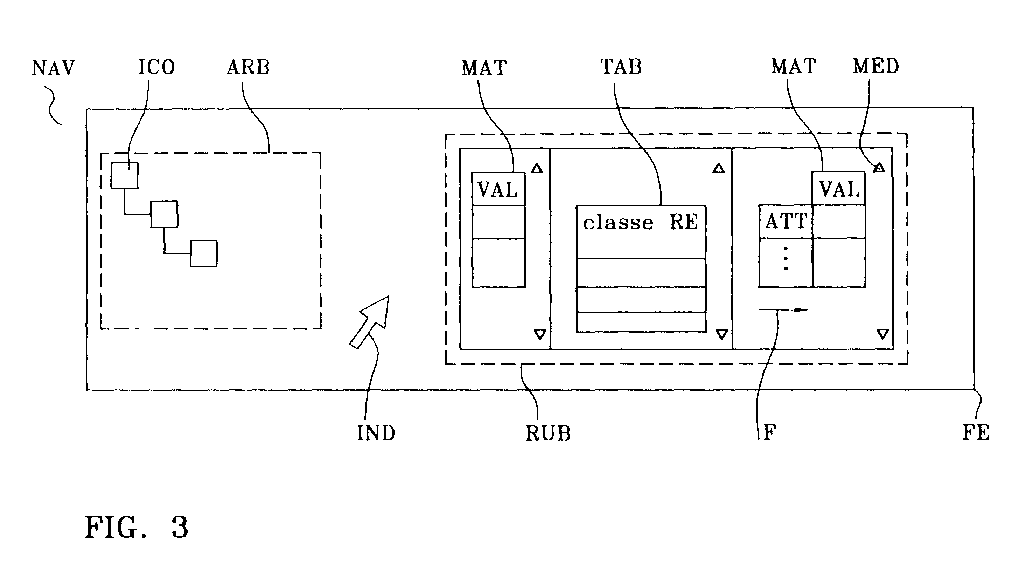

On décrira maintenant, avec référence à la figure 3, un mode de réalisation d'un outil de navigation conforme à la présente invention.

L'invention consiste à visualiser au moyen d'une interface graphique d'un outil de navigation NAV,
- le contenu d'un objet sélectionné,
- et la position de cet objet sélectionné par l'intermédiaire d'une structure arborescente ARB faisant apparaître à la fois la classe d'objets et l'instance associées à l'objet sélectionné ainsi que tout ou partie des classes et instances associés aux objets visualisés au cours de la navigation.

Dans l'exemple illustré, la visualisation du contenu de l'objet courant s'effectue par l'intermédiaire d'un ruban RUB.

L'outil de navigation NAV illustré comprend une structure arborescente ARB et un ruban RUB. Dans l'exemple illustré, une même fenêtre FE comprend la structure arborescente ARB de l'arbre de contenance ainsi que le ruban RU. Selon une autre variante, la structure arborescente et le ruban peuvent appartenir à deux fenêtres distinctes.

Le ruban RUB illustré comprend alternativement des tables TAB et des matrices MAT. Une matrice décrit un objet. Un objet peut être l'objet OM1 associé à la machine M1. Chaque ligne de la matrice comprend des noms d'attributs ATT et chaque colonne de la matrice comprend le contenu VAL de cet attribut, c'est-à-dire sa valeur. Une matrice comprend également la liste des classes subordonnées d'un objet donné. Sur la figure, une classe subordonnée à un objet est précédée d'une flèche unidirectionnelle F. Comme exemple non illustré, pour l'objet OM1, la liste des classes subordonnées est la classe RE. L'utilisateur peut ainsi, simultanément ou non, visualiser le contenu d'un objet donné et poursuivre la navigation en sélectionnant l'une des classes proposée dans la matrice. Il obtient alors une table TAB. Une table TAB comprend la liste des objets associés à une classe donnée.

Différents rubans représentent les différents chemins existants entre la racine de l'arbre et les noeuds terminaux de l'arbre. A tout instant, un nombre limité de ces tables et matrices est présenté à l'écran (ordinairement deux ou trois) par l'intermédiaire du ruban RUB. Sur la figure 3, on a représenté une table TAB et deux matrices dont une est à moitié visible. L'utilisateur peut, par une action de déroulement, dérouler le ruban par un mouvement continu (vertical ou horizontal) du texte affiché sur l'écran. Un menu déroulant MED est, en quelque sorte, un moyen pour défiler une longue bande derrière l'écran. Les nouvelles données apparaissent pendant que les anciennes disparaissent.

De préférence, les tables et matrices comprennent des champs (field) qui contiennent du texte. La sélection d'un champ quelconque s'effectue en cliquant, par l'intermédiaire d'un index IND manoeuvrpar l'intermédiaire d'une souris, à l'intérieur du champ. La sélection d'un champs peut aussi s'effectuer par l'intermédiaire de commandes issues d'un clavier. Un menu déroulant MED permet alors de se déplacer et de se positionner dans un champ de la table ou de la matrice. De manière générale, un champ sélectionné apparaît en surbrillance à l'écran de façon à distinguer le champ sélectionné des autres champs.

De préférence, la structure arborescente ARB donne la possibilité de visualiser les classes et instances sous forme d'icônes ICO. Dans un exemple, il suffit, pour un utilisateur de cliquer, par l'intermédiaire d'un index IND, sur l'icône associé à l'objet qu'il souhaite visualiser. La structure arborescente ARB est une interface graphique que l'utilisateur manipule pour visualiser des objets quelconques situés dans l'arbre de contenance.

L'outil de navigation comprend un programme. L'interface graphique décrit les moyens mis en oeuvre par ce programme pour entrer en contact avec l'utilisateur. De manière connue, cette interface graphique est un environnement composé d'icônes, de fenêtres et de menus déroulants.

Le procédé consiste à combiner l'utilisation du ruban avec la structure arborescente. En d'autres mots, la structure arborescente assiste la navigation le long du ruban, en ce sens que la structure arborescente constitue une vue synoptique des différentes branches explorées par le ruban.

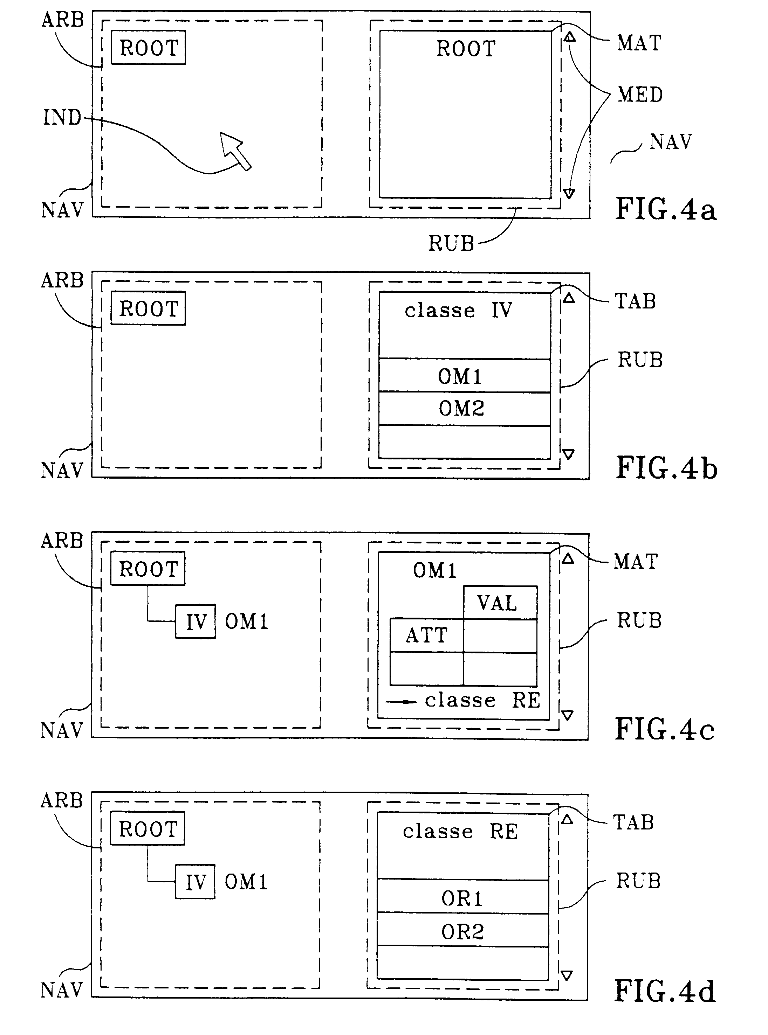

Un exemple de réalisation du procédé de navigation est illustré sur les figures 4a à 4g. Dans un soucis de clarté de la description, les figure 4a à 4g représente des états de la fenêtre à des instants successifs au cours d'une navigation de l'arbre de contenance. On a représenté alternativement sur chaque figure une table ou une matrice. En réalité, l'ensemble des figures ne forment qu'une et une seule fenêtre.

Une première étape consiste à ouvrir une cession de navigation.

Sur la figure 4a, on visualise la racine ROOT sous forme d'une icône dans la structure arborescente. La matrice associée à la racine ROOT ne comprend pas de noms et de valeurs d'attributs pour la simple raison que la racine ROOT n'est pas un objet en tant que tel mais simplement un point d'entrée dans l'arbre de contenance. Toutefois, la matrice comprend l'ensemble des classes ou faisceaux qui lui sont subordonnés. Dans l'exemple illustré, la racine ROOT comprend comme faisceau uniquement la classe inventaire IV définie précédemment.

Une deuxième étape consiste à sélectionner la classe IV dans la table inclue dans le ruban RU. Une fois la sélection de la classe effectuée, l'outil de navigation déroule le ruban et se positionne sur une autre table TAB qui fournit tous les objets appartenant à cette classe IV. Le résultat est illustré à la figure 4b.

Concrètement, les objets appartenant à cette classe sont les objets OM1 et OM2. L'utilisateur a donc le choix entre la sélection de l'objet OM1 ou l'objet OM2. Avec l'aide du menu déroulant MED, il peut fixer son choix en déroulant la table.

Dans l'exemple illustré, une troisième étape consiste à sélectionner l'objet OM1. Le résultat de cette sélection est représenté sur la figure 4c.

Deux effets peuvent se produisent simultanément ou non :
1- la structure arborescente ne se déploie qu'en partie. Concrètement, l'icône associée à la classe IV apparaît à l'écran. A ce stade du procédé, l'utilisateur visualise son parcours dans l'arbre de contenance. La structure arborescente ne fait apparaître que la classe sélectionné IV et l'objet OM1 sélectionné qui est une instance de la classe IV.
2- Une matrice et un champ, visibles sur la figure 4c, apparaissent à l'écran. Cette matrice comprend tous les attributs associés à l'objet OM1. Cette matrice comprend également la valeur de ces attributs. En outre, la matrice comprend l'ensemble des faisceaux issus de l'objet OM1 sélectionné. Dans l'exemple illustré, la classe RE est issue de l'objet OM1.

Une quatrième étape consiste à sélectionner le champs associé au faisceau RE. Le résultat de cette sélection est représenté à la figure 4d. Sur cette figure, une table apparaît sur laquelle on peut visualiser les différents objets OR1 et OR2 associés à la classe RE.

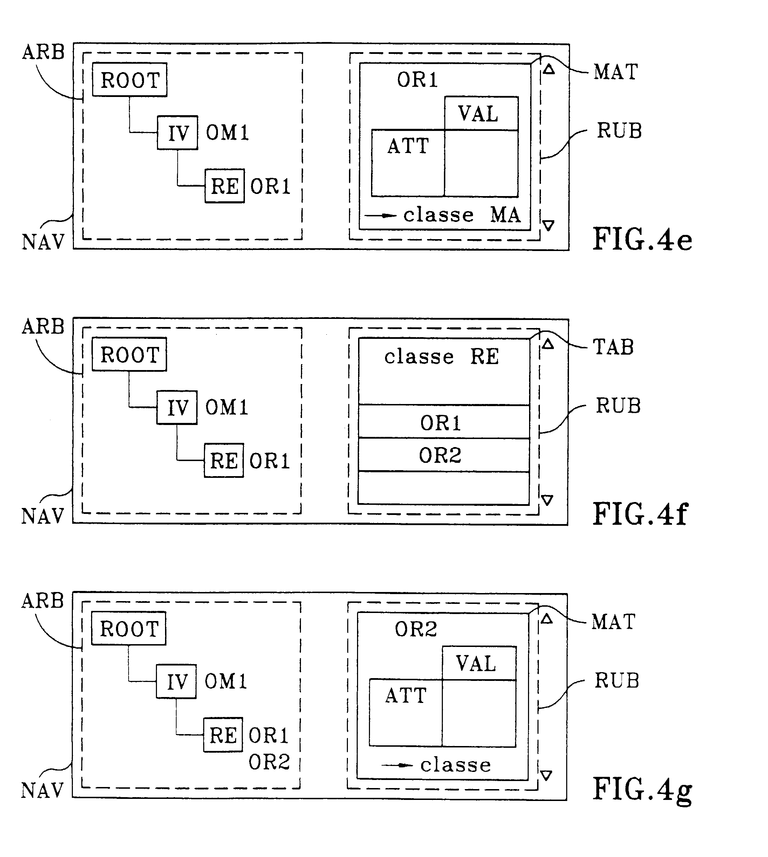

Lors d'une cinquième étape, l'utilisateur sélectionne, par exemple, l'objet OR1 dans la table. Le résultat de cette sélection est représentée sur la figure 4e
deux effets peuvent se produisent simultanément ou non:
1- l'icône associée à la classe RE apparaît à l'écran. A ce stade du procédé, l'utilisateur visualise son parcours dans l'arbre de contenance. La structure arborescente fait apparaître la classe sélectionné RE et l'objet OR1 sélectionné qui est une instance de la classe RE. L'outil de navigation fait apparaître à la fois la classe d'objets et l'instance associées à l'objet courant, ainsi que tout ou partie des classes et instances associées aux objets visualisés au cours de la précédente navigation. Les classes et instances associés aux objets visualisés au cours de la précédente navigation sont, dans l'exemple illustré, la classe IV et l'objet OR1.
   On visualise donc, grâce à la structure arborescente, la racine ROOT reliée par l'intermédiaire d'une branche à l'icône associée à la classe IV, elle même reliée à la classe RE. Les instances sélectionnées OM1 et OR1 sont par exemple affichés à proximité des icônes de classes repectives IV et RE
2- Une matrice et un champ apparaissent à l'écran. Cette matrice comprend tous les attributs associés à l'objet OR1. Cette matrice comprend également la valeur de ces attributs. En outre, la matrice comprend l'ensemble des faisceaux issu de l'objet OR1 sélectionné. Dans l'exemple illustré, une classe MA est issue de l'objet OR1.

A ce stade du procédé, l'utilisateur a la possibilité de naviguer dans l'arbre.
Le ruban se déroule automatiquement suite à une sélection d'un objet.

Grâce à l'outil de navigation, l'utilisateur a la possibilité de visualiser successivement des objets qui ne sont pas reliés par une branche dans l'arbre de contenance. Des objets visualisés successivement peuvent être ou ne pas être reliés par une branche. L'utilisateur peut donc sélectionner, au cours d'une navigation de l'arbre de contenance, un objet quelconque de l'arbre de contenance. Ainsi, la sélection d'un objet, dans la structure arborescente, positionne automatiquement le ruban sur l'objet sélectionné en question.

Selon un exemple, l'utilisateur désire visualiser un objet de la classe réseau RE. Pour y parvenir, lors d'une sixième étape, il lui suffit de faire une sélection en cliquant sur l'icône correspondant de la structure arborescente. Le résultat de cette sélection est représenté à la figure 4f. Dans l'exemple illustré, la structure arborescente ARB fait apparaître toutes les classes et instances associées aux objets visualisés au cours de la cession de navigation. La sélection de l'icône associée à la classe RE positionne le ruban simultanément ou non sur la table sur laquelle on peut visualiser les différents objets OR1 et OR2 associés à la classe RE. A ce moment, l'utilisateur a le choix de sélection entre deux objets OR1 et OR2.

Lors d'une septième étape, l'utilisateur peut donc sélectionner l'objet OR2. Le résultat de cette sélection est représenté sur la figure 4g. Une instance OR2 s'affiche à proximité de l'icône associée à la classe RE.
Deux effets peuvent se produisent simultanément ou non :
1- L'outil de navigation fait apparaître à la fois la classe d'objets et l'instance associés à l'objet courant, ainsi que tout ou partie des classes et instances associés aux objets visualisés au cours de la précédente navigation. Les classes et instances associées aux objets visualisés au cours de la précédente navigation sont maintenus. Dans l'exemple illustré, les classes IV et RE et les objets visualisés respectifs OM1 et OR1 sont maintenus. A ce stade du procédé, l'utilisateur visualise son parcours dans l'arbre de contenance. De plus, la structure arborescente fait apparaître l'objet OR2 sélectionné qui est une instance de la classe RE. On visualise donc, grâce à la structure arborescente, la racine ROOT reliée par l'intermédiaire d'une branche à l'icône associée à la classe IV, elle même reliée à la classe RE. L'instance sélectionnée est affichée à proximité de l'icône de classe RE.
2- Une matrice et un champ peuvent apparaître simultanément ou non à l'écran. Cette matrice comprend tous les attributs associés à l'objet OR2. Cette matrice comprend également la valeur de ces attributs. En outre, la matrice comprend l'ensemble des faisceaux issus de l'objet OR2 sélectionné.

De préférence, l'outil de navigation ne construit pas nécessairement toutes les tables et toutes les matrices de la branche en cours de navigation. Celles-ci peuvent être construites automatiquement lors de la navigation. Concrètement, la table associée à un objet est construite dès l'instant où l'utilisateur sélectionne cet objet dans la structure arborescente. De la même manière, les tables et les matrices visualisées sont automatiquement détruites dès l'instant où l'objet associé n'est plus sélectionné.

Selon une autre particularité de l'invention, l'utilisateur peut sélectionner, au cours d'une navigation de l'arbre de contenance, un objet quelconque de l'arbre de contenance. L'utilisateur a donc la possibilité de visualiser successivement des objets qui ne sont pas reliés par une branche.

D'une manière générale, on peut dire que l'invention a pour objet un procédé de navigation dans un arbre de contenance conforme au protocole de gestion de type CMIS/CMIP, ledit arbre étant un programme représenté par l'intermédiaire d'une structure organisée de manière hiérarchique avec une racine ROOT et au moins un noeud associé à un objet, un objet étant défini par un contenu incluant une classe d'objets et des propriétés, le procédé de navigation consistant à parcourir l'arbre entre des noeuds et étant, caractérisé en qu'il consiste à visualiser au moyen d'une interface graphique d'un outil de navigation NAV,
- le contenu d'un objet sélectionné,
- et la position de cet objet sélectionné par l'intermédiaire d'une structure arborescente ARB faisant apparaître à la fois la classe d'objets et l'instance associées à l'objet sélectionné ainsi que tout ou partie des classes et instances associées aux objets visualisés au cours de la navigation. Une autre particularité de l'invention consiste à sélectionner dans la structure arborescente des objets quelconques situés dans l'arbre de contenance.

On a vu aussi, dans un exemple, que le procédé cosiste à représenter le contenu des différents objets inclus dans l'arbre de contenance par l'intermédiaire d'un ruban RUB, chaque ruban étant associé à un parcourt différent entre la racine et un noeud terminal, et en ce que la sélection d'un objet dans la structure arborescente positionne automatiquement le ruban sur l'objet sélectionné en question.

La représentation du contenu consiste à visualiser, par l'intermédiaire de la structure arborescente ARB, le parcours effectué au travers du ruban RUB.

On a vu que, grâce au procédé, on peut visualiser simultanément ou non la position de l'objet courant par l'intermédiaire de la structure arborescente ARB et le contenu de l'objet courant par l'intermédiaire du ruban RUB.

On a vu aussi, selon un exemple, que le procédé consiste à inclure dans le ruban RUB au moins une table pour visualiser la liste des objets associés à une classe donnée et moins une matrice pour visualiser la liste des attributs d'un objet quelconque de l'arbre de contenance.

L'invention a aussi pour objet corollaire un outil de navigation d'un arbre de contenance conforme au protocole de gestion de type CMIS/CMIP, ledit arbre de contenance étant un programme représenté par l'intermédiaire d'une structure organisée de manière hiérarchique avec une racine ROOT et au moins un noeud associé à un objet, un objet étant défini par un contenu incluant une classe d'objets et des propriétés, caractérisé en ce qu'il comprend un ruban et une structure arborescente pour la mise en oeuvre du procédé.

Selon une variante, on a vu que la structure arborescente ARB et le ruban RUB sont inclus dans une même fenêtre FE.

Egalement, selon une variante, on a vu que la classe d'objets et l'instance associée à l'objet sélectionné ainsi que tout ou partie des classes et instances associées aux objets visualisés au cours de la navigation sont représentés sous forme d'icône.

Il ressort de ce qui précède que la présente invention offre de nombreux avantages.

L'outil de navigation NAV définit une métaphore de visualisation qui permet à l'utilisateur de visualiser simplement les deux types d'information indispensables, à savoir la structure de l'arbre de contenance, par l'intermédiaire d'une structure arborescente ARB, et le contenu des objets inclus dans l'arbre par l'intermédiaire du ruban RUB.

La structure arborescente donne la possibilité à un utilisateur de situer de manière simple un objet de l'arbre de contenance tout en naviguant dans l'arbre de contenance par l'intermédiaire du ruban RUB.

L'invention donne aussi la possibilité à un utilisateur de l'outil de navigation NAV d'accéder à un objet quelconque de l'arbre de contenance par l'intermédiaire de la structure arborescente ARB. Lorsqu'un objet est sélectionné dans la structure arborescente, le ruban RUB se positionne automatiquement sur l'objet en question. Ceci évite toute opération de déroulement et réduit donc considérablement le temps de sélection d'un objet.

## Revendications

1. Procédé de navigation dans un arbre de contenance conforme au protocole de gestion de type CMIS/CMIP, ledit arbre étant un programme représenté par l'intermédiaire d'une structure organisée de manière hiérarchique avec une racine (ROOT) et au moins un noeud associé à un objet, un objet étant défini par un contenu incluant une classe d'objets et des propriétés, le procédé de navigation consistant à parcourir l'arbre entre des noeuds et étant caractérisé en qu'il consiste à visualiser au moyen d'une interface graphique d'un outil de navigation (NAV),
- le contenu d'un objet sélectionné,
- et la position de cet objet sélectionné par l'intermédiaire d'une structure arborescente (ARB) faisant apparaître à la fois la classe d'objets et l'instance associées à l'objet sélectionné ainsi que tout ou partie des classes et instances associées aux objets visualisés au cours de la navigation.

2. Procédé selon la revendication 1, caractérisé en ce qu'il consiste à sélectionner dans la structure arborescente (ARB) des objets quelconques situés dans l'arbre de contenance.

3. Procédé selon l'une des revendications 1 et 2, caractérisé en ce qu'il consiste à représenter le contenu des différents objets inclus dans l'arbre de contenance par l'intermédiaire d'un ruban (RUB), chaque ruban étant associé à un parcourt différent entre la racine et un noeud terminal, et en ce que la sélection d'un objet dans la structure arborescente positionne automatiquement le ruban (RUB) sur l'objet sélectionné en question.

4. Procédé selon l'une des revendications 1 à 3, caractérisé en ce que la représentation du contenu consiste à visualiser, par l'intermédiaire de la structure arborescente (ARB), le parcours effectué au travers du ruban (RUB).

5. Procédé selon l'une des revendications 1 à 4, caractérisé en qu'il consiste à visualiser simultanément ou non la position de l'objet courant par l'intermédiaire de la structure arborescente (ARB) et le contenu de l'objet courant par l'intermédiaire du ruban (RUB).

6. Procédé selon l'une des revendications 1 à 5, caractérisé en qu'il consiste à inclure dans le ruban (RUB) au moins une table pour visualiser la liste des objets associés à une classe donnée et moins une matrice pour visualiser la liste des attributs d'un objet quelconque de l'arbre de contenance.

7. Outil de navigation d'un arbre de contenance conforme au protocole de gestion de type CMIS/CMIP, ledit arbre de contenance étant un programme représenté par l'intermédiaire d'une structure organisée de manière hiérarchique avec une racine (ROOT) et au moins un noeud associé à un objet, un objet étant défini par un contenu incluant une classe d'objets et des propriétés, caractérisé en ce qu'il comprend un ruban (RUB) et une structure arborescente (ARB) pour la mise en oeuvre du procédé défini par les revendications 1 à 6.

8. Outil de navigation selon la revendication 7, caractérisé en ce que la structure arborescente ARB et le ruban RUB sont inclus dans une même fenêtre FE.

9. Outil de navigation selon la revendication 7 ou 8, caractérisé en que la classe d'objets et l'instance associée à l'objet sélectionné, ainsi que tout ou partie des classes et instances associées aux objets visualisés au cours de la navigation sont représentés sous forme d'icône
